# EUROPÄISCHE PATENTSCHRIFT

(11) **EP 0 919 325 B1**
(45) Veröffentlichungstag und Bekanntmachung des Hinweises auf die Patenterteilung: **17.03.2004**
(21) Anmeldenummer: 98121800.1
(22) Anmeldetag: 17.11.1998
(51) Int. Cl.: B23Q 7/14, B23Q 41/02, B65G 17/42, B65G 19/02, B61B 10/00

(54) **Vorrichtung zur Ein- und Ausschleusung von an einer Kette umlaufenden Arbeitsstation**
Device for the feeding of a circulating workholder to or from a conveyor
Dispositif de transfert d'une porte-pièce sur et d'un convoyeur rotatif

(30) Priorität: 28.11.1997 DE 19752750
(43) Veröffentlichungstag der Anmeldung: 02.06.1999
(73) Patentinhaber: Hennecke GmbH, 51379 Leverkusen (DE)
(72) Erfinder: Willing, Bernd, 53225 Bonn (DE)
(74) Vertreter: Feldhues, Michael L.F., Dr.

(56) Entgegenhaltungen:
- JP-A- 61 226 356
- US-A- 3 010 410
- US-A- 3 807 314

## Beschreibung

Für die Durchführung einer gleichartigen Folge von Arbeitsschritten an einer Vielzahl von Arbeitsstationen werden häufig jeder einzelne Arbeitsschritt ortsfest wiederholend durchgeführt, wobei eine Vielzahl von Arbeitsstationen an einem Band oder einer Kette angetrieben am Ort der Durchführung des jeweiligen Arbeitsschrittes vorbeigeführt werden.

Bei der gleichartigen Folge von Arbeitsschritten kann es sich z.B. um die Montage eines Apparates handeln, wobei die verschiedenen Montageschritte an unterschiedlichen Orten durchgeführt werden und das zu montierende Teil auf einer Arbeitsstation von Ort zu Ort zur Durchführung der verschiedenen Montageschritte bewegt wird. Ähnlich organisiert sein kann die Herstellung von Formteilen, bei der die Arbeitsschritte Reinigen der Form, Versehen der Form mit einem Trennmittel, Einlegen eines Verdrängungskörpers, erstes Füllen der Form, Aushärten des ersten Formteils, Entnahme des Verdrängungskörpers, zweites Füllen der Form, Aushärten der zweiten Formfüllung, Öffnen der Form und Entnahme des Formteils an unterschiedlichen Orten durchgeführt werden, wobei die Form auf einer Arbeitsstation von einem Ort zum andern geführt wird.

Dabei können die Arbeitsstationen in Form von Arbeitsstationswagen ausgebildet sein, wobei die Arbeitsstationswagen durch einseitig an den Wagen vorgesehene bzw. angreifende Verbindungselemente zu dem umlaufenden Kettenantrieb bewegt werden.

Die Ausbildung von Arbeitsstationen in Form von selbstständigen Arbeitsstationswagen bietet sich insbesondere dann an, wenn die Erstausrüstung der Arbeitsstation bzw. deren Nachrüstung oder zwischenzeitlich nicht an der Kette durchführbare Arbeitsschritte örtlich von dem Fördersystem getrennt durchgeführt werden. In diesem Falle kann es erforderlich sein, einzelne Arbeitsstationswagen aus dem Kettenumlauf auszuschleusen bzw. in diesen einzuschleusen.

Gegenstand der vorliegenden Erfindung ist eine Vorrichtung zur Durchführung einer gleichartigen Folge von Arbeitsschritten an auf einer ovalen Bahn umlaufenden fahrbaren Arbeitsstationswagen, wobei die Wagen durch einseitig an diesen vorgesehene bzw. angreifende lösbare Verbindungselemente zu einem umlaufenden Kettenantrieb bewegt werden, an der Außenseite dieses ovalen Fördersystems mindestens eine Einschleuse- und mindestens eine Ausschleuseführungsbahn vorgesehen ist, der je eine Übergabestelle zur Kette zugeordnet ist, wobei ferner Kopplungselemente vorgesehen sind, über die die Wagen an der anderen Seite in die Führungsbahnen eingekoppelt werden können, sowie an jeder Übergabestelle schaltbare Weichenelemente vorgesehen sind, die in Schleusestellung zum Ausschleusen die Verbindungselemente lösen und die Kopplungselemente ankoppeln bzw. zum Einschleusen die Kopplungselemente entkoppeln und den Eingriff der Verbindungselemente bewirken.

In einer konkreten Ausführungsform kann vorgesehen sein, daß die beispielsweise in einem Oval umlaufende Kette in einer Führungsrinne läuft, die Wagen seitlich überstehenden Halterungen in der Führungsrinne laufende Führungsrollen sowie mindestens einen Mitnahmestift aufweisen, wobei an der Kette Mitnahmekäfige vorgesehen sind, in die der Mitnahmestift eingreift. Kettenseitig kann die Übergabestelle dann so gestaltet sein, daß die Außenbegrenzung der Führungsrinne unterbrochen ist, so daß die Führungsrollen seitlich aus der Führungsrinne und der Mitnahmestift seitlich aus dem Mitnahmekäfig, der nach außen offen ist, austreten können.

In der konkreten Ausführungsform können die Einschleusungs- und Ausschleusungsbahnen in Form von Führungsrinnen ausgebildet sein, die im Abstand zur Führungsrinne des Kettenantriebs parallel zu diesem angeordnet sind, wobei der Abstand etwa der Breite des Arbeitsstationswagens entspricht. Auf der Außenseite des Wagens sind dann ebenfalls Führungsrollen vorgesehen, die nach Übergabe von der Kette zur Ausschleusungsführungsbahn in der Führungsrinne der Ausschleusungsführungsbahn laufen. An der Übergabestelle weist die Führungsrinne der Ausschleusungsführungsbahn Unterbrechungen auf, die, für den Fall daß keine Übergabe erfolgen soll, durch Weichenzungen verschlossen sind. Soll der an der Übergabestelle vorbeigeführte Wagen ausgeschleust werden, werden die Weichenzungen geschaltet, derart, daß sie die Führungsrollen des Wagens in die Führungsrinne hineinleiten.

Die Einschleusungsstelle ist entsprechend gestaltet. Bei der Einschleusung ist darauf zu achten, daß der Arbeitsstationswagen positionsgenau in Bezug auf das Verbindungselement zur Kette eingeschleust wird, in Bezug auf die konkrete Ausführungsform daß der Mitnahmestift des Wagens in den Mitnahmekäfig der Kette eingeführt wird.

Erfindungsgemäß bevorzugt ist daher vorgesehen, daß jeder Arbeitsstationswagen einen Distanzhalter zum nächsten Wagen aufweist, wobei der Abstand der Verbindungselementteile an der Kette (d.h. konkret die Mitnahmekäfige) einen Abstand aufweisen, der der Länge des Wagens plus Distanzhalter entspricht. Auf diese Weise wird der einzuschleusende Wagen an dem freien Platz der Kette eingeschleust, wobei der Folgewagen mit seinem Distanzhalter den einzuschleusenden Wagen exakt in die Position schiebt, in welcher die Verbindung zur Kette erfolgt.

Vorzugsweise weist die Einschleusungsführungsbahn einen lastabhängigen Antrieb auf, dessen Maximalgeschwindigkeit größer ist als die Kettengeschwindigkeit. Bevorzugt weist die Einschleusungsführungsbahn einen Reibantrieb auf, der an der Außenfläche des Wagens angreift. Auf diese Weise wird sichergestellt, daß der einzuschleusende Wagen vor der Übergabe eine größere Geschwindigkeit aufweist als der folgende Wagen an der Kette, so daß der einzuschleusende Wagen während der Übergabe durch den Distanzhalter des folgenden Wagens in die Übergabeposition geschoben wird.

Die Erfindung wird anhand der nachfolgenden Figuren näher erläutert:

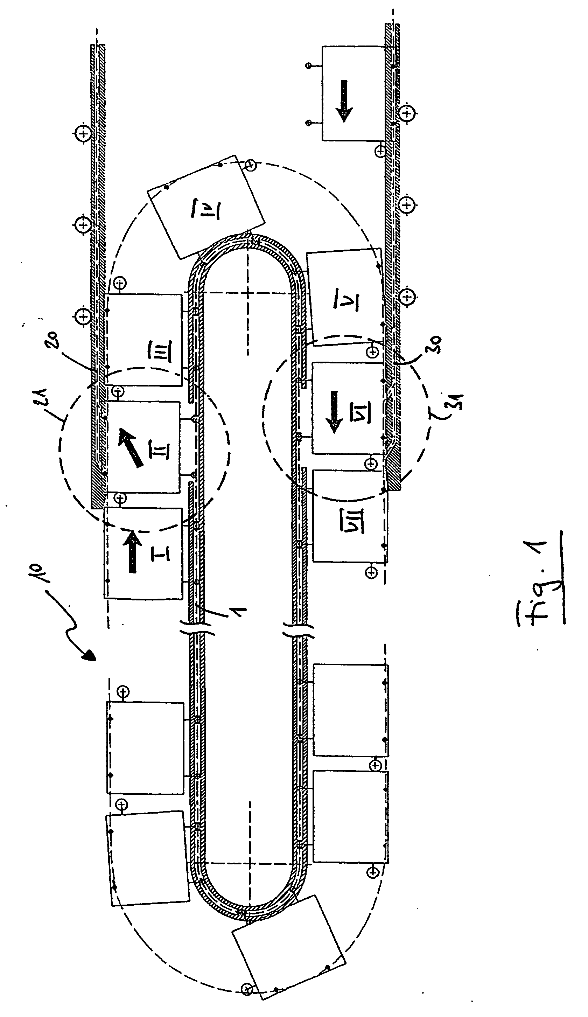

Fig. 1 zeigt ein Karussel 10, mit der in einem Oval umlaufenden Kette 1, an der die mit römischen Ziffern bezeichneten Arbeitsstationswagen umlaufen. Ferner ist schematisch eine Ausschleusungsführungsbahn 20 und eine Einschleusungsführungsbahn 30 dargestellt. Die Übergabestellen sind durch die strichlierten Kreise 21 bzw. 31 bezeichnet.

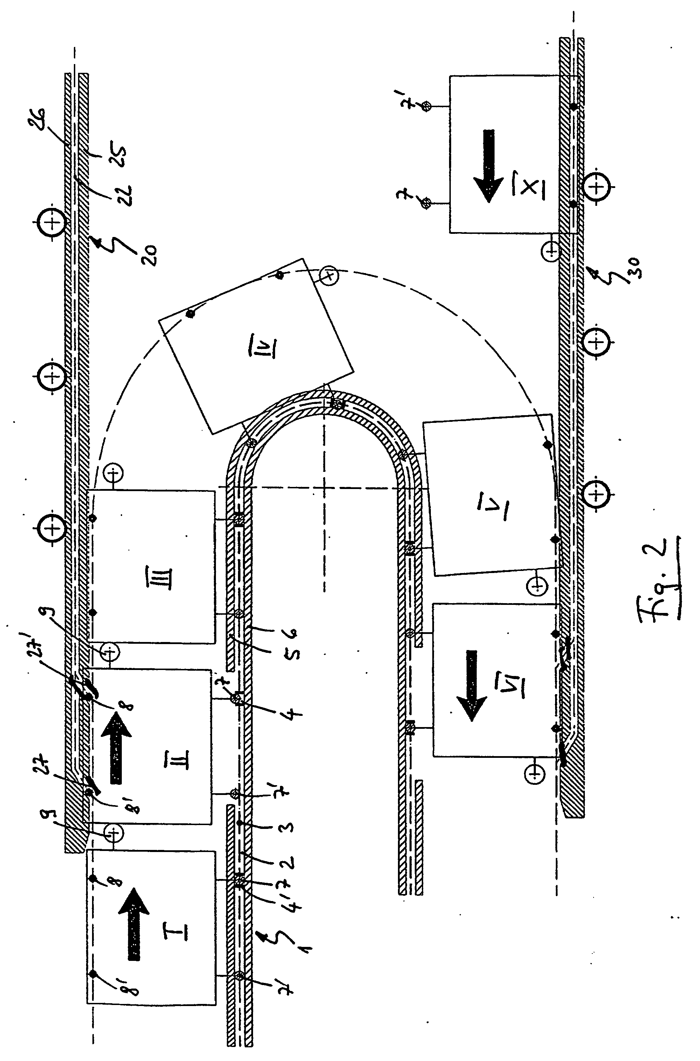

In der vergrößerten Darstellung der Fig. 2 ist erkennbar, daß der umlaufende Kettenantrieb 1 aus einer Führungsrinne 2, die aus den beiden Führungsleisten 5 und 6 gebildet wird, besteht, wobei innerhalb der Führungsrinne 2 die angetriebene Kette 3 verläuft. Die Kette weist als kettenseitiges Verbindungselementteil in regelmäßigem Abstand angeordnete Mitnahmekäfige 4, 4', ... auf. Seitlich an den durch römische Ziffern bezeichneten Arbeitsstationswagen sind Führungsrollen 7, 7' vorgesehen, die solange der Wagen an der Kette geführt wird, in der Rinne 2 laufen.

Die Ausschleusungsführungsbahn 20 besteht ebenfalls aus einer Rinne 22, die durch Führungsleisten 25 und 26 gebildet wird. Die Arbeitsstationswagen weisen auf der dem Kettenantrieb abgewandten Seite Führungsrollen 8 und 8' auf, die im Falle der Übergabe durch schaltbare Weichenzungen 27 und 27' ergriffen werden und in die Führungsrinne 22 der Ausschleusungsführungsbahn 22 eingeleitet werden; siehe Wagen II. Auf der den Weichen 27 und 27' gegenüberliegenden Seite ist die Führungsleiste 5 unterbrochen, so daß die zu dem auszuschleusenden Wagen gehörenden Führungsrollen 7 und 7' aus der Führungsrinne 2 sowie aus dem Mitnahmekäfig 4 herausbewegt werden.

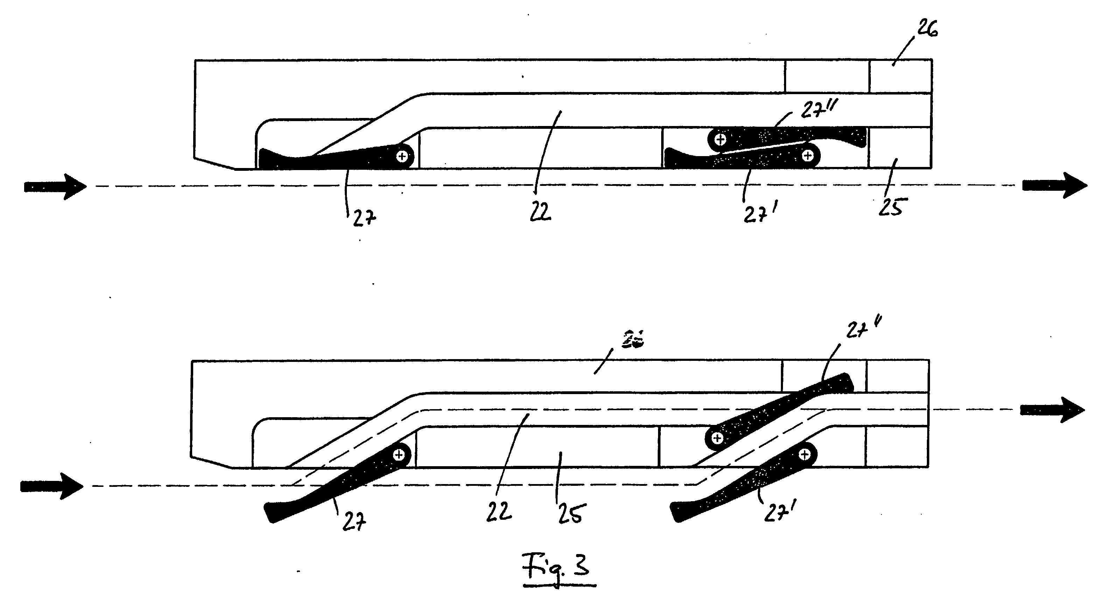

Fig. 3 zeigt eine vergrößerte Darstellung der Weichenzungen, wobei die Ziffern gleiche Elemente wie in Fig. 2 bezeichnen. Die obere Darstellung zeigt die Weichenzungen in der Stellung "Durchfahrt", die untere Darstellung zeigt die Weichenzungen in der Stellung "Übergabe".

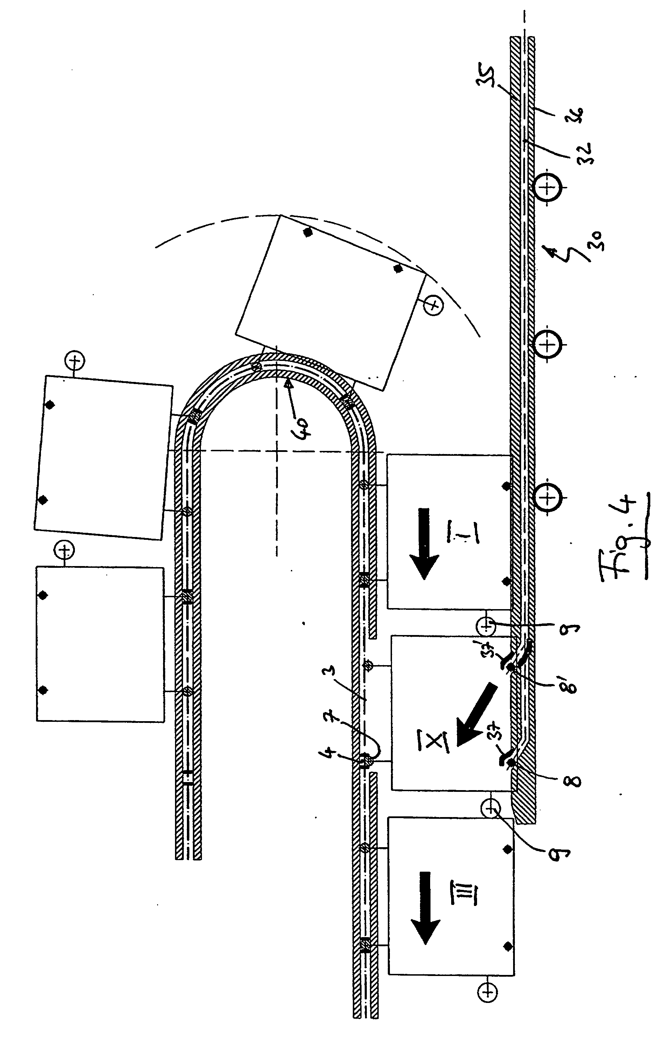

Fig. 4 zeigt die Einschleusung des in Fig. 2 noch in Wartestellung befindlichen Wagens X an die Position, in der in Fig. 2 der Wagen II ausgeschleust ist. Es ist die Endphase der Einschleusung dargestellt, die die positionsgerechte Verbindung zur Kette 3 erläutert, dargestellt. Im Bereich der Umlenkung 40 der Kette weisen die Arbeitsstationswagen einen erheblich vergrößerten Abstand auf. In diesem Bereich wurde der Wagen X zunächst vor den Wagen I geschoben. Im Zeitpunkt der Übergabe, d.h. wenn die Führungsrollen 8, 8' des Wagens X die Weichenzungen 37 und 37' erreichen, wird der einzuschleusende Wagen X positionsgenau über die Abstandshalter 9 zwischen den Wagen I und III geführt, so daß die Führungsrolle 7 positionsgenau in den Mitnahmekäfig 4 der Kette 3 eingeführt wird.

Dem Fachmann ist ohne weiteres klar, daß die Verbindungselemente zwischen umlaufender Kette und Arbeitsstationswagen sowie die Kopplungselemente zu den Einund Ausschleusungsführungsbahnen auch anders als beispielhaft dargestellt gestaltet werden können. Beispielsweise können diese in Form von schaltbaren Elektromagneten oder Kipphacken ausgebildet sein. Erfindungswesentlich ist, daß die Führung der Arbeitsstationswagen zum Zweck der Ein- und Ausschleusung einmal auf der einen Seite und einmal auf der anderen Seite erfolgt, so daß aufwendige Weichenkonstruktionen an dem umlaufenden Kettenantrieb, die von den Wagen überfahren werden müßten, vermieden werden. Sowohl der umlaufende Kettenantrieb als auch die Ein- und Ausschleusungsführungsbahnen können oberhalb des Hallenbodens angeordnet sein ohne Hindernisse für die auf eigenen Rädern fahrenden Arbeitsstationswagen zu bilden.

## Patentansprüche

1. Vorrichtung zur Durchführung einer gleichartigen Folge von Arbeitsschritten an auf einer ovalen Bahn umlaufenden fahrbaren Arbeitsstationswagen (I, II, III...), wobei die Wagen durch einseitig an den Wagen vorgesehene bzw. angreifende lösbare Verbindungselemente (7) zu einem umlaufenden Kettenantrieb (1) bewegt werden, an der Außenseite dieses ovalen Fördersystems mindestens eine Einschleuse- und mindestens eine Ausschleuseführungsbahn (30, 20) vorgesehen ist, der je eine Übergabestelle (21, 31) zur Kette (1) zugeordnet ist, wobei ferner Kopplungselemente (8) vorgesehen sind, über die die Wagen an der anderen Seite in die Führungsbahnen eingekoppelt werden können, sowie an jeder Übergabestelle schaltbare Weichenelemente (27, 27', 37, 37') vorgesehen sind, die in Schleusestellung zum Ausschleusen die Verbindungselemente (7) lösen und die Kopplungselemente (8) ankoppeln bzw. zum Einschleusen die Kopplungselemente (8) entkoppeln und den Eingriff der Verbindungselemente (7) bewirken.

2. Vorrichtung nach Anspruch 1, wobei jeder Arbeitsstationswagen einen Distanzhalter aufweist, der den Mindestabstand zweier Wagen an der Kette definiert und der Abstand der kettenseitigen Verbindungselementteile zumindest an der Übergabestelle so bemessen ist, daß die diesen Verbindungselementen zugeordneten Wagen über den Distanzhalter Berührungskontakt haben.

3. Vorrichtung nach Anspruch 1 oder 2, wobei beim Einschleusen während der Übergabe der zu übergebende Wagen durch den folgenden Wagen in Position geschoben wird.

4. Vorrichtung nach einem der Ansprüche 1 bis 3, wobei die Einschleusungsführungsbahn einen lastabhängigen Antrieb aufweist, dessen Maximalgeschwindigkeit größer ist als die Kettengeschwindigkeit.

5. Vorrichtung nach Anspruch 4, wobei der Antrieb ein Reibantrieb ist.

## Claims

1. Device for carrying out a similar sequence of working steps on travelling work station wagons (I, II, III...) circulating on an oval track, wherein the wagons are moved by means of detachable connection elements (7) to a circulating chain drive (1), said detachable connection elements being provided and/or engaging on one side of them; at least one insertion and at least one removal guide track (30, 20), to each of which a transfer point (21, 31) to the chain (1) is allocated, is provided on the outside of this oval conveyor system, wherein coupling elements (8) are further provided via which the wagons may be coupled into the guide tracks on the other side of them, and switchable points elements (27, 27', 37, 37') which in insertion/removal position release the connection elements (7) and couple the coupling elements (8) for removal purposes and/or uncouple the coupling elements (8) and bring about the engagement of the connection elements (7) for insertion purposes are provided at each transfer point.

2. Device according to Claim 1, wherein each work station wagon has a spacer which defines the minimum distance between two wagons on the chain and the distance between the chain-side connection element parts at least at the transfer point is dimensioned in such a way that the wagons allocated to these connection elements have touch-contact via the spacer.

3. Device according to Claim 1 or 2, wherein on insertion, during transfer, the wagon to be transferred is pushed into position by the following wagon.

4. Device according to one of Claims 1 to 3, wherein the insertion guide track has a load-dependent drive, the maximum speed of which is higher than the chain speed.

5. Device according to Claim 4, wherein the drive is a friction drive.

## Revendications

1. Dispositif pour exécuter une succession identique d'étapes de travail sur des chariots de poste de travail roulants (I, II, III...) circulant sur une voie ovale, les chariots étant déplacés vers l'entraînement à chaîne en circulation (1) par des éléments de liaison détachables (7), prévus sur un côté sur les chariots ou attaquant ceux-ci, dispositif dans lequel au moins une voie de guidage d'entrée et au moins une voie de guidage de sortie (30, 20) sont prévues sur le côté extérieur de ce système de convoyage ovale, voies auxquelles sont associées respectivement un emplacement (21, 31) de transfert à la chaîne (1), et dans lequel sont prévus en outre des éléments d'accouplement (8) via lesquels les chariots peuvent être accouplés dans les voies de guidage sur l'autre côté, ainsi que des éléments d'aiguillage commutables (27, 27', 37, 37') à chaque emplacement de transfert qui, dans la position de sortie, détachent les éléments de liaison (7) et accouplent les éléments d'accouplement (8) et qui, pour l'entrée, désaccouplent les éléments d'accouplement (8) et provoquent l'engagement des éléments de liaison (7).

2. Dispositif selon la revendication 1, dans lequel chaque chariot de poste de travail comprend un élément écarteur qui définit la distance minimale de deux chariots sur la chaîne, et au moins à l'emplacement de transfert la distance des parties d'élément de liaison côté chaîne est dimensionnée de telle sorte que les chariots associés à ces éléments de liaison sont en contact via l'élément écarteur.

3. Dispositif selon l'une ou l'autre des revendications 1 et 2, dans lequel, lors de l'entrée, pendant le transfert, le chariot à transférer est poussé dans sa position par le chariot suivant.

4. Dispositif selon l'une des revendications 1 à 3, dans lequel la voie de guidage d'entrée comprend un entraînement dépendant de la charge, dont la vitesse maximale est supérieure à la vitesse de la chaîne.

5. Dispositif selon la revendication 4, dans lequel l'entraînement est un entraînement à friction.
